# EUROPEAN PATENT SPECIFICATION

(11) **EP 0 671 325 B1**
(45) Date of publication and mention of the grant of the patent: **10.12.1997**
(21) Application number: 95301325.7
(22) Date of filing: 01.03.1995
(51) Int. Cl.: B65B 13/18, B65B 13/30

(54) **Compressive cutting mechanism having plural-edged cutter**
Vorrichtung zum Kompressionsschneiden mittels eines Mehrschneiden-Messers
Mécanisme de coupe par compression à couteau à bords multiples

(30) Priority: 07.03.1994 US 206848
(43) Date of publication of application: 13.09.1995
(73) Proprietor: SIGNODE CORPORATION, Glenview, Illinois 60025-5811 (US)
(72) Inventor: Figiel, Janusz, Mount Prospect, Illinois (US); Drabarek, Peter, Chicago, Illinois (US)
(74) Representative: Rackham, Stephen Neil

(56) References cited:
- EP-A- 0 281 511
- FR-A- 1 414 646
- GB-A- 2 118 265
- US-A- 3 241 579

## Description

This invention pertains to a cutting mechanism useful particularly but not exclusively in a strapping tool of a type used to apply a steel strap in a tensioned loop around a package via a series of interlocking joints comprising interlockable shoulders punched into two overlapped ends of the strap.

One version of a strapping tool of the type noted above is disclosed in Cheung U.S. Patent No. 3,998,429. Certain aspects of a later version of such a manual strapping tool are disclosed in NiX U.S. Patent No. 5,203,541. Different aspects of another, more recent version of such a strapping tool are disclosed in two co-pending European Patent Applications No. 94307292.6 and 94307293.4, published as EP-A- and EP-A-

Tremper U.S. Patent No. 4,825,512 provides a useful example of a steel strap having a series of interlocking joints formed by interlockable shoulders punched into its overlapped ends.

Generally, a strapping tool of the type noted above comprises an actuating handle, which is arranged to be manually oscillated. The actuating handle rotates an output shaft, which actuates a series of cams, via an input shaft, to which the actuating handle is coupled, and via intermediate gears. Several of the cams drive punches, which punch interlockable shoulders into two overlapped ends of a steel strap.

One of the cams drives a cutter, which cuts through an outer one of the overlapped ends of the applied strap compressively, so as to cut any excess strap from the applied strap and desirably without cutting into an inner one of the overlapped ends. An anvil supports the overlapped ends as the cutter compressively cuts through the outer one of the overlapped ends. Generally, the cutter has been provided with one cutting edge, which eventually becomes dull. Generally, it is inconvenient to re-sharpen the cutting edge or to replace the cutter, which heretofore has been an expensive component.

Manual strapping tools of the type noted above are available commercially from Signode Industry Packaging Systems (a unit of Illinois Tool Works Inc.) of Glenview, Illinois, under its SIGNODE trademark. One such commercially available tool (SIGNODE Model SMC12/58/34 Combination Strapping Tool) includes a removable cutter, which has a single blade, and which is designed to slide into and from a recess in a cutter holder so as to facilitate replacement of the removable cutter.

This invention provides a cutting mechanism that is useful particularly but not exclusively in a strapping tool of the type noted above. It is envisioned that the cutting mechanism may have other uses, for example as in a wire cutting tool, a tree-pruning tool, or some other tool for compressively cutting a workpiece.

According to a first aspect of this invention, a cutting mechanism comprises an anvil arranged to support the workpiece, a cutter holder movable toward and away from the anvil, and an elongate cutter mounted removably in the holder and movable conjointly with the holder, towards and away from the anvil, the cutter having plural, elongate, parallel cutting edges, one of which projects toward the anvil when the cutter is mounted in the holder, the cutter being removable from the holder when the cutting edge projecting toward the anvil becomes dull and being re-mountable in the holder such that another of the cutting edges projects toward the anvil.

According to a second aspect of this invention, a strapping tool of a type used to apply a steel strap in a tensioned loop around a package via a series of interlocking joints comprising interlockable shoulders punched into overlapped ends of the strap, includes a cutting mechanism arranged to cut an outer one of the overlapped ends compressively and including an anvil arranged to support the overlapped ends of such a strap, is characterised in that the cutting mechanism also includes a cutter holder movable towards and away from the anvil, and an elongate cutter mounted removably in the holder so as to extend crosswise in relation to the overlapped ends of the strap when the overlapped ends of the strap are supported by the anvil, the cutter having plural, elongate, parallel cutting edges, one of which projects toward the anvil when the cutter is mounted in the holder, the cutter being removable from the holder when the cutting edge projecting towards the anvil becomes dull and being re-mountable in the holder so that another of the cutting edges projects towards the anvil.

In a preferred arrangement, the holder has an elongate recess having an open end and has an elongate slot opening from the elongate recess, toward the anvil, and defining two opposed edges retaining the cutter. Moreover, the cutter is configured to fit lengthwise into the recess when the cutter is mounted to the holder. Furthermore, one of the cutting edges protrudes through the slot and projects toward the anvil when the cutter is mounted to the slot.

Preferably, the cutter has a polygonal profile. More preferably, the cutter profile may be triangular, possibly equilateral, or quadrilateral, possibly rhombic or square. An equilateral, triangular profile is most preferred, because it provides three cutting edges defining acute (60°) angles, which are desirable for cutting steel strap with a cutter made from hardened tool steel.

A preferred embodiment of this invention will now be described with reference to the accompanying drawings, in which:-
Figure 1 is a fragmentary, partly exploded, perspective view of a strapping tool of the type noted above. The strapping tool incorporates a cutting mechanism constituting a preferred embodiment of this invention;
Figure 2, on an enlarged scale, is an exploded, perspective view of a cutter holder, an elongate cutter having an equilateral, triangular profile, a roller, a shaft for the roller, and a biasing spring, as employed in the cutting mechanism;
Figure 3, on a further enlarged scale, is a top plan of the cutter holder, the elongate cutter, and the other elements shown in Figure 2, except for the biasing spring, which is hidden;
Figure 4 is a front elevation of the cutter holder, the elongate cutter, and the other elements shown in Figure 2. A cam co-acting therewith, two overlapped ends of a steel strap, an anvil supporting the overlapped ends, and a stepped portion of a base plate are shown fragmentarily;
Figure 5 is a partly fragmentary, side elevation of the cutter holder, the elongate cutter, and the other elements shown in Figure 4;
Figure 6 is a bottom plan of the cutter holder and the elongate cutter; and,
Figures 7 and 8 are perspective views of two alternative cutters, which respectively have a square profile and a rhombic profile.

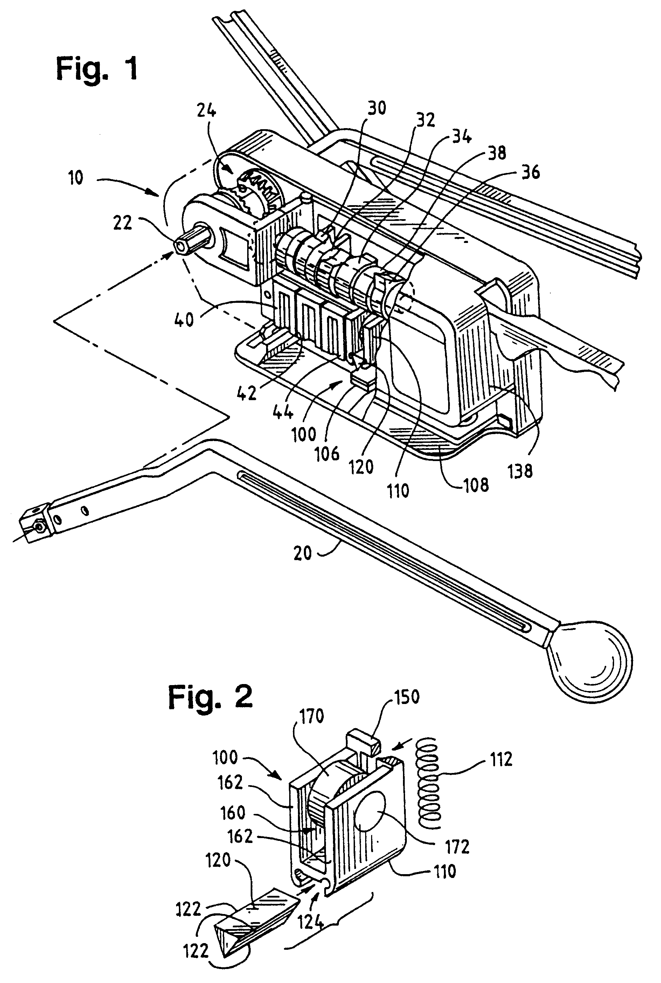

As shown in Figure 1, a strapping tool 10 is used to apply a steel strap in a tensioned loop around a package via a series of interlocking joints comprising interlockable shoulders punched into two overlapped ends of the strap. The strapping tool 10 incorporates a cutting mechanism 100 constituting a preferred embodiment of this invention.

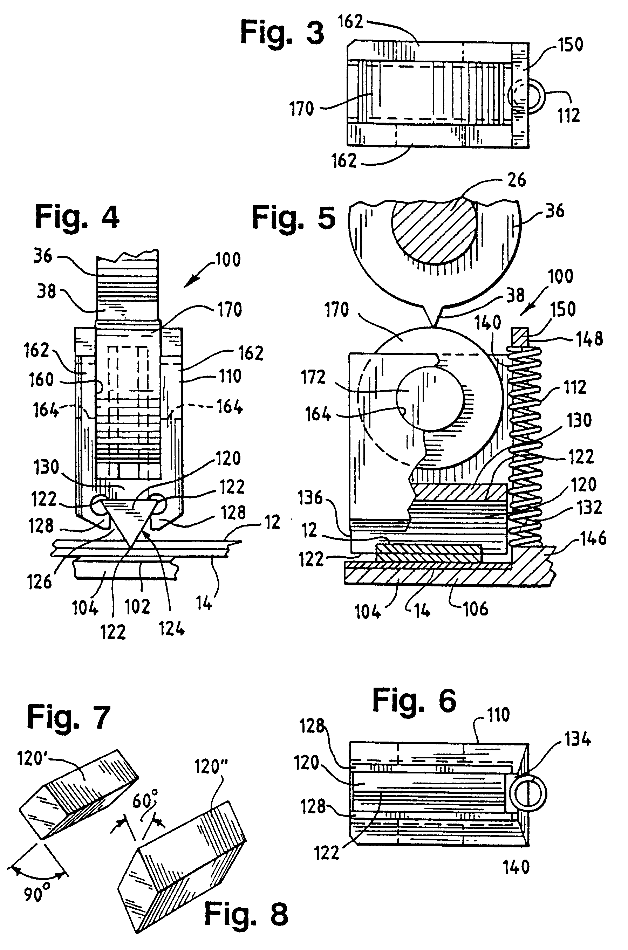

As shown in Figures 4 and 5, in which the overlapped ends of a steel strap being applied around a package (not shown) are shown fragmentarily, the cutting mechanism 100 is used for compressively cutting through the outer end 12 of the steel strap being applied, so as to cut any excess strap from the steel strap being applied without cutting the inner end 14 of the steel strap being applied.

Except for the cutting mechanism 100, the strapping tool 10 is similar to the strapping tool disclosed in co-pending European Patent Applications No. 94307292.6 and 94307293.4, published as EP-A- and EP-A-

The strapping tool 10 comprises an actuating handle 20, which is coupled to an input shaft 22, and which is arranged to be manually oscillated so as to impart oscillatory rotation to the input shaft 22. As disclosed in the above European Patent Applications, oscillatory rotation of the input shaft 22 is converted to unidirectional rotation of an output shaft 26, via a set of bevel gears 24. Four cams 30, 32, 34, 36, are coupled to the output shaft 26 so as to rotate conjointly with the output shaft 26.

The cams 30, 32, 34, drive three punches 40, 42, 44, which punch interlockable shoulders into the overlapped ends 12, 14, of the steel strap being applied. Dies (not shown) co-acting with the punches 40, 42, 44, underlie the overlapped ends 12, 14, of the steel strap being applied. The cam 36, which has a single lobe 38, is used to actuate the cutting mechanism 100.

The cutting mechanism 100 comprises an anvil 102, which is mounted on a lower step 104 of a stepped platform 106 fixed to or formed on a base plate 108 of the strapping tool 10. The anvil 102 supports the overlapped ends 12, 14, of the steel strap as the outer end 12 is cut compressively.

The cutting mechanism 100 comprises a cutter holder 110, which is mounted within the strapping tool 10 so as to be vertically movable within a limited range of vertical movement, and an elongate cutter 120, which is mounted removably to the cutter holder 110. Thus, the cutter holder 110 and the elongate cutter 120 are movable toward and away from the anvil 102. The cutting mechanism 100 comprises a biasing spring 112, which is made from coiled wire, and which is arranged to bias the cutter holder 110 and the elongate cutter 120 away from the anvil 102.

As shown in Figures 2, 4, 5, and 6, the elongate cutter 120 is machined from tool steel so as to have an equilateral triangular profile providing three parallel cutting edges 122 defining acute (60°) angles. As shown in Figures 2 through 6, the cutter holder 110 is machined so as to have an elongate recess 124 having an open end 126 and an elongate slot 126 opening downwardly from the elongate recess 124, toward the anvil 102, and defining two opposed edges 128. The elongate cutter 120 is configured to fit lengthwise into the elongate recess 124 so that one of the cutting edges 122 protrudes downwardly through the elongate slot 126, between the opposed edges 128, when the elongate cutter 120 is mounted to the cutter holder 110 .

When the elongate cutter 120 is mounted to the cutter holder 110, the opposed edges 128 retain the elongate cutter 120 so that the elongate cutter 120 cannot drop from the elongate recess 124, through the elongate slot 126. Also, an upper wall 130 of the elongate recess 124 and the opposed edges 128 coact 60 as to prevent the elongate cutter 120 from rotating within the elongate recess 124. Further, a rearward end 132 of the elongate cutter 120 is retained by a rear stop 134, which is an integral part of the elongate cutter 120. At the open end 126 of the elongate recess 124, a forward end 136 of the elongate cutter 120 is retained by a cover 138 (see Figure 1) of the strapping tool 10. The cover 138 is removable to provide access to the cutter holder 110 and to the elongate cutter 120.

As shown in Figures 2, 3, 5, and 6, the cutter holder 110 is machined so as to define a semi-cylindrical recess 140, which opens rearwardly and downwardly, and in which a biasing spring 112 is disposed. A lower end 144 of the biasing spring 112 bears against an upper step 146 of the stepped platform 106. An upper end 148 of the biasing spring 112 bears against a cross portion 150 of the cutter holder 110. The biasing spring 112 is compressed so as to bias the cutter holder 110 and the elongate cutter 120 upwardly away from the anvil 102. As shown in Figures 2 through 6, the cutter holder 110 is machined so as to define a roller-accommodating recess 160 between two side walls 162. Each side wall 162 has a circular aperture 164, which is aligned axially with the circular aperture of the other wall 162. A roller 170 is mounted rotatably within the roller-accommodating recess 160, via a shaft 172 received by the circular apertures 164 in the side walls 162, so as to extend partly above the side walls 162. The biasing spring 140 biases the cutter holder 110 and the elongate cutter 120 upwardly so that the roller 170 bears against and co-acts with the cam 36 having the single lobe 38. Except when the cam 36 is rotated so that the single lobe 38 begins to engage the roller 160, the cam 36 permits the cutter holder 110 and the elongate cutter 120 to move upwardly away from the anvil 102, as biased by the biasing spring 140. When the cam 36 is rotated so that the single lobe 38 begins to engage the roller 160, the single lobe 38 cams the roller 170 downwardly so as to drive the cutter holder 110 and the elongate cutter 120 downwardly toward the anvil 102, as opposed by the biasing spring 140.

As shown in Figures 4 and 5, when the cutter holder 110 and the elongate cutter 120 are driven downwardly by the single lobe 38 of the cam 36, the cutting edge 122 projecting downwardly toward the anvil 102 compressively cuts the outer end 12 of the steel strap without cutting the inner end thereof, as the overlapped ends 12, 14, are supported by the anvil 102. Once the single lobe 38 of the cam 36 has passed the roller 160, the biasing spring 140 moves the cutter holder 110 and the elongate cutter 120 upwardly away from the anvil 102, and away from the severed end 12 of the steel strap.

When the cutting edge 122 projecting downwardly becomes dull after extended use of the strapping tool 10, the cover 138 is removed to provide access to the cutter holder 110 and to the elongate cutter 120. The elongate cutter 120 may be then removed from the cutter holder 110, rotated so that another cutting edge 122 projects downwardly, and re-mounted to the cutter holder 110. There is no need, therefore, to replace the elongate cutter 120 until all three edges 122 have become dull.

As shown in Figures 2, 4, 5, and 6, the elongate cutter 120 is machined so as to have an equilateral triangular profile, which provides three cutting edges 122 defining acute (60°) angles. As shown in Figure 7, an elongate cutter 120' machined from tool steel so as to have a square profile providing four cutting edges defining right (90°) angles may be alternatively used, if a cutter holder (not shown) having a suitably configured slot to mount elongate cutter 120' but being similar to the cutter holder 110 in other respects is provided. As shown in Figure 8, an elongate cutter 120'' machined from tool steel so as to have a rhombic profile providing two cutting edges defining acute (60°) angles and two other edges defining obtuse (120°) angles may be alternatively used, if a cutter holder (not shown) having a suitably configured slot to mount the elongate cutter 120'' and being similar to the cutter holder 110 in other respects is provided.

## Claims

1. For cutting a workpiece (12) compressively, a cutting mechanism (100) comprising an anvil (104) arranged to support the workpiece (12), a cutter holder (130) movable toward and away from the anvil (104), and an elongate cutter (120) mounted removably in the holder (130) and movable conjointly with the holder (130), towards and away from the anvil (104), characterised by the cutter (120) having plural, elongate, parallel cutting edges (122), one of which projects toward the anvil (104), when the cutter (120) is mounted in the holder (130), the cutter (120) being removable from the holder (130) when the cutting edge (122) projecting toward the anvil becomes dull and being re-mountable in the holder (130) such that another of the cutting edges (122) projects toward the anvil (104).

2. A strapping tool (10) of a type used to apply a steel strap (12, 14) in a tensioned loop around a package via a series of interlocking joints comprising interlockable shoulders punched into overlapped ends of the strap (12, 14), includes a cutting mechanism (100) arranged to cut an outer one (12) of the overlapped ends (12, 14) compressively and including an anvil (104) arranged to support the overlapped ends of such a strap (12, 14), characterised in that the cutting mechanism (100) also includes a cutter holder (130) movable towards and away from the anvil (104), and an elongate cutter (120) mounted removably in the holder (130) so as to extend crosswise in relation to the overlapped ends (12, 14) of the strap when the overlapped ends of the strap are supported by the anvil (104), the cutter (120) having plural, elongate, parallel cutting edges (122), one of which projects toward the anvil (104) when the cutter (120) is mounted in the holder (130), the cutter (120) being removable from the holder (130) when the cutting edge (122) projecting towards the anvil (104) becomes dull and being re-mountable in the holder (130) so that another of the cutting edges (122) projects towards the anvil (104).

3. A cutting mechanism or a strapping machine including a cutting mechanism according to claim 1 or 2, further comprising means (112) for biasing the holder (130) and the cutter (120) mounted therein away from the anvil (104) and means (36, 38) for moving the holder (130) and the cutter (120) mounted therein towards the anvil (104) so as to enable the cutting edge (122) projecting towards the anvil (104) to cut the workpiece supported by the anvil (104).

4. A cutting mechanism or a strapping machine including a cutting mechanism according to any one of the preceding claims, wherein the holder (130) has an elongate recess (124) with an elongate slot opening toward the anvil (104) and defining two opposed edges (128) retaining the cutter (120) when the cutter (120) is mounted in the holder (130), and wherein the cutter (120) is configured to fit lengthwise into the recess (124) with one of the cutting edges (122) protruding through the slot and projecting toward the anvil (104) when the cutter (120) is mounted in the holder (130).

5. A cutting mechanism or a strapping machine including a cutting mechanism according to any one of the preceding claims, wherein the cutter (120) has a polygonal profile.

6. A cutting mechanism or a strapping machine including a cutting mechanism according to claim 5, wherein the cutter (120) profile is triangular.

7. A cutting mechanism or a strapping machine including a cutting mechanism according to claim 6, wherein the cutter profile is equilateral.

8. A cutting mechanism or a strapping machine including a cutting mechanism according to claim 5, wherein the cutter profile is quadrilateral.

9. A cutting mechanism or a strapping machine including a cutting mechanism according to claim 8, wherein the cutter profile is rhombic or square.

## Patentansprüche

1. Schneidvorrichtung (100) zum Kompressionschneiden eines Werkstücks (12), mit einem Amboß (104), der eingerichtet ist, das Werkstück (12) zu unterstützen, einem Schneidwerkzeughalter (130), der zum Amboß (104) hin und von diesem weg bewegbar ist, und mit einem langgestreckten Schneidwerkzeug (120), das lösbar in dem Halter (130) montiert ist und zusammen mit dem Halter (130) zum Amboß (104) hin und von diesem weg bewegbar ist, dadurch gekennzeichnet, daß das Schneidwerkzeug (120) mehrere langgestreckte parallele Schneidkanten (122) aufweist, von denen eine zum Amboß (104) hin vorsteht, wenn das Schneidwerkzeug (120) in dem Halter (130) montiert ist, wobei das Schneidwerkzeug (120) vom Halter (130) lösbar ist, wenn die Schneidkante (122), die zum Amboß vorsteht, stumpf wird und im Halter (130) derart wiederbefestigbar ist, daß eine andere Schneidkante (122) zum Amboß (104) hin vorsteht.

2. Umreifungswerkzeug (10) des Typs, der benutzt wird, um ein Stahlumreifungsband (12, 14) in einer gespannten Schleife um ein Packgut herum anzubringen, mittels einer Reihe von verriegelnden Verbindungen, die miteinander verriegelbare Schultern aufweisen, die in überlappende Enden des Umreifungsmittels (12, 14) gestanzt sind, mit einer Schneidvorrichtung (100), die eingerichtet ist, um ein äußeres (12) der überlappenden Enden (12, 14) unter Druck zu schneiden und mit einen Amboß (104), der eingerichtet ist, die überlappenden Enden eines solchen Umreifungsmittels (12, 14) zu unterstützen, dadurch gekennzeichnet, daß die Schneidvorrichtung (100) auch einen Schneidwerkzeughalter (130) umfaßt, der zum Amboß (104) hin und von diesem weg bewegbar ist sowie ein langgestrecktes Schneidwerkzeug (120), das lösbar in dem Halter (130) montiert ist, derart, daß es sich in Querrichtung zu den überlappenden Enden (12, 14) des Umreifungsmittels erstreckt, wenn die überlappenden Enden des Umreifungsmittels von dem Amboß (104) unterstützt sind, wobei das Schneidwerkzeug (120) mehrere langgestreckte parallele Schneidkanten (122) aufweist, von denen eine zum Amboß (104) hin vorsteht, wenn das Schneidwerkzeug (120) im Halter (130) montiert ist, wobei das Schneidwerkzeug (120) vom Halter (130) lösbar ist, wenn die zum Amboß (104) hin vorstehende Schneidkante (122) abgestumpft ist, und das im Halter (130) wiederbefestigbar ist, so daß eine andere der Schneidkanten (122) zum Amboß (104) hin vorsteht.

3. Schneidvorrichtung oder Umreifungsmaschine, die ein Schneidwerkzeug gemäß Anspruch 1 oder 2 umfaßt, die weiterhin Mittel (112) aufweist, um den Halter (130) und das darin montierte Schneidwerkzeug (120) vom Amboß (104) weg vorzuspannen sowie Mittel (36, 38), um den Halter (130) und das darin montierte Schneidwerkzeug (120) zum Amboß (104) hin zu bewegen, um so zu ermöglichen, daß die Schneidkante (122), die zum Amboß (104) hin vorsteht, das von dem Amboß (104) unterstützte Werkstück schneidet.

4. Schneidvorrichtung oder Umreifungsmaschine mit einer Schneidvorrichtung nach einem der vorangegangen Ansprüche, worin der Kalter (130) eine langgestreckte Ausnehmung (124) mit einem langgestreckten Schlitz aufweist, der sich zum Amboß (104) hin öffnet, und so zwei gegenüberliegende Kanten (128) definiert, die das Schneidwerkzeug (120) halten, wenn das Schneidwerkzeug (120) in dem Halter (130) montiert ist, und bei der das Schneidwerkzeug (120) so konfiguriert ist, daß es längs in die Ausnehmung (124) paßt, wobei eine der Schneidkanten (122) den Schlitz durchgreift und zum Amboß (104) hin vorsteht, wenn das Schneidwerkzeug (120) in dem Halter (130) montiert ist.

5. Schneidvorrichtung oder Umreifungsmaschine mit einer Schneidvorrichtung nach einem der vorangegangenen Ansprüche, bei der das Schneidwerkzeug (120) einen polygonalen Querschnitt aufweist.

6. Schneidvorrichtung oder Umreifungsmaschine mit einer Schneidvorrichtung nach Anspruch 5, bei der das Profil des Schneidwerkzeugs (120) dreieckig ist.

7. Schneidvorrichtung oder Umreifungsmaschine mit einer Schneidvorrichtung nach Anspruch 6, bei der das Profil des Schneidwerkzeugs gleichseitig ist.

8. Schneidvorrichtung oder Umreifungsmaschine mit einer Schneidvorrichtung nach Anspruch 5, bei der das Profil des Schneidwerkzeugs vierseitig ist.

9. Schneidvorrichtung oder Umreifungsmaschine mit einer Schneidvorrichtung nach Anspruch 8, bei der das Profil des Schneidwerkzeugs rhombisch oder quadratisch ist.

## Revendications

1. Mécanisme de coupe (100) pour couper par compression une pièce d'oeuvre (12), comprenant une enclume (104) agencée pour supporter la pièce d'oeuvre (12), un porte-outil (130) de couteau pouvant se rapprocher de l'enclume (104) et s'en écarter, et un couteau allongé (120) monté, de manière démontable, dans le porte-outil (130) et pouvant se rapprocher, conjointement avec le porte-outil (130), de l'enclume (104) et s'en écarter, caractérisé en ce que le couteau (120) comporte plusieurs bords coupants (122) parallèles, allongés, dont l'un fait saillie vers l'enclume (104) lorsque le couteau (120) est monté dans le porte-outil (130) ; et en ce que l'on peut démonter le couteau (120) du porte-outil (130) lorsque le bord coupant (122) faisant saillie vers l'enclume s'émousse et le remonter dans le porte-outil (130) de façon telle qu'un autre des bords coupants (122) fasse saillie vers l'enclume (104).

2. Outil de cerclage (10) de type utilisé pour appliquer un ruban d'acier (12, 14) en une boucle tendue autour d'un paquet via une série de jonctions se verrouillant mutuellement comprenant des épaulements pouvant se verrouiller mutuellement, poinçonnés dans des extrémités se chevauchant du ruban (12, 14), qui comprend un mécanisme de coupe (100) agencé pour couper l'une, extérieure, (12) des extrémités se chevauchant (12, 14) par compression, et comprenant une enclume (104) agencée pour supporter les extrémités se chevauchant de ce ruban (12, 14), caractérisé en ce que le mécanisme de coupe (100) comprend également un porte-outil (130) de couteau pouvant se rapprocher de l'enclume (104) et s'en écarter, et un couteau allongé (120) monté, de manière démontable, dans le porte-outil (130) de façon à s'étendre dans une disposition croisée par rapport aux extrémités se chevauchant (12, 14) du ruban lorsque les extrémités se chevauchant du ruban sont supportées par l'enclume (104) ; en ce que le couteau (120) comporte plusieurs bords coupants (122) parallèles, allongés, dont l'un fait saillie vers l'enclume (104) lorsque le couteau (120) est monté dans le porte-outil (130) ; et en ce que l'on peut démonter le couteau (120) du porte-outil (130) lorsque le bord coupant (122) faisant saillie vers l'enclume (104) s'émousse et le remonter dans le porte-outil (130) de sorte qu'un autre des bords coupants (122) fasse saillie vers l'enclume (104).

3. Mécanisme de coupe ou machine de cerclage comprenant un mécanisme de coupe selon la revendication 1 ou 2, comprenant en outre un moyen (112) pour rappeler le porte-outil (130) et le couteau (120) qui y est monté en les écartant de l'enclume (104), et un moyen (36, 38) pour rapprocher le porte-outil (130) et le couteau (120) qui y est monté de l'enclume (104) de façon à permettre au bord coupant (122) faisant saillie vers l'enclume (104) de couper la pièce d'oeuvre supportée par l'enclume (104).

4. Mécanisme de coupe ou machine de cerclage comprenant un mécanisme de coupe selon l'une quelconque des revendications précédentes, dans lequel le porte-outil (130) comporte un évidement allongé (124), avec une fente allongée ouverte vers l'enclume (104) et définissant deux bords opposés (128) retenant le couteau (120) lorsque le couteau (120) est monté dans le porte-outil (130), et dans lequel le couteau (120) est configuré pour s'ajuster dans le sens de la longueur dans l'évidement (124), l'un des bords coupants (122) dépassant par la fente et faisant saillie vers l'enclume (104) lorsque le couteau (120) est monté dans le porte-outil (130).

5. Mécanisme de coupe ou machine de cerclage comprenant un mécanisme de coupe selon l'une quelconque des revendications précédentes, dans lequel le couteau (120) a un profil polygonal.

6. Mécanisme de coupe ou machine de cerclage comprenant un mécanisme de coupe selon la revendication 5, dans lequel le profil de couteau (120) est triangulaire.

7. Mécanisme de coupe ou machine de cerclage comprenant un mécanisme de coupe selon la revendication 6, dans lequel le profil de couteau est équilatéral.

8. Mécanisme de coupe ou machine de cerclage comprenant un mécanisme de coupe selon la revendication 5, dans lequel le profil de couteau est quadrilatéral.

9. Mécanisme de coupe ou machine de cerclage comprenant un mécanisme de coupe selon la revendication 8, dans lequel le profil de couteau (120) est rhombique ou carré.
